# EUROPEAN PATENT SPECIFICATION

(11) **EP 2 897 422 B1**
(45) Date of publication and mention of the grant of the patent: **13.02.2019**
(21) Application number: 13838010.0
(22) Date of filing: 04.09.2013
(51) Int. Cl.: H04W 52/02, G08B 17/00, G08B 25/10, H04W 56/00, H04W 4/00

(54) **WIRELESS COMMUNICATION SYSTEM**
DRAHTLOSES KOMMUNIKATIONSSYSTEM
SYSTÈME DE COMMUNICATION SANS FIL

(30) Priority: 12.09.2012 JP 2012200757
(43) Date of publication of application: 22.07.2015
(73) Proprietor: Panasonic Intellectual Property Management Co., Ltd., Osaka-shi, Osaka 540-6207 (JP)
(72) Inventor: KURITA, Masanori, Osaka 540-6207 (JP); HOSHIBA, Keitaro, Osaka 540-6207 (JP)
(74) Representative: Appelt, Christian W.
(86) International application number: PCT/JP2013/005239
(87) International publication number: WO 2014/041763

(56) References cited:
- EP-A1- 1 855 260
- WO-A1-2011/104603
- JP-A- 2006 270 505
- JP-A- 2010 147 868
- JP-A- 2011 118 800
- US-A1- 2010 079 278
- US-A1- 2011 235 560

## Description

### Technical Field

The present invention relates to wireless communication systems, and in particular to a wireless communication system in which multiple wireless devices perform wireless communication with each other.

### Background Art

Document 1 (JP 2009-171067 A) discloses a wireless fire alarm system as an example of conventional wireless communication systems.

In this conventional example, each wireless device serves as a fire alarm device which produces an alarm in response to detection of a fire. A wireless device which has detected a fire produces an alarm and transmits a wireless signal, and another wireless device which has received the wireless signal also produces an alarm.

Thereby, all the wireless devices cooperate to produce alarms.

Further, in the above conventional example, each wireless device activates its reception circuit intermittently. When the reception circuit is activated, each wireless device checks whether the reception circuit can receive a desired electric wave (e.g., the wireless signal transmitted from another wireless device). Each wireless device switches to a waiting state by deactivating the reception circuit immediately when the electric wave cannot be found. In contrast to a case where the reception circuit is always kept in operation, an average power consumption can be reduced drastically, and thereby it is made possible to prolong lifetime of a battery used as a power source.

However, the aforementioned intermittent reception operation may cause a delay of timing of receiving the wireless signal from ideal timing by the intermittent reception period. Hence, simply prolonging the intermittent reception period is not available for the purpose of reducing the power consumption.

In view of this, there has been already proposed a wireless communication which synchronizes the intermittent reception periods of the reception circuits of the multiple wireless devices and allows a wireless device which has detected a fire to transmit a wireless signal at a timing coinciding with the timing of activation of the reception circuit (see document 2 [JP 2010-147868 A]). In the conventional example disclosed in document 2, the timings of the intermittent reception of the reception circuits of the multiple wireless devices coincide together, and therefore it is possible to shorten delay time necessary for each wireless device to receive the wireless signal while the average power consumption can be reduced.

In the above conventional example, to prolong the lifetime of the battery, the fire sensing circuit for sensing a fire is also activated intermittently in addition to the intermittent reception of the reception circuit. Therefore, when the fire sensing circuit senses a fire immediately after when the reception circuit ends the intermittent reception, the wireless signal is not transmitted until next timing of the intermittent reception comes. Hence, delay time until each wireless device produces an alarm is likely to be considerably prolonged.

US 2011/0235560 A1 shows a wireless communication system that includes a first wireless terminal and a plurality of second wireless terminals. The first wireless terminal transmits a synchronization signal. The synchronization signal comprises a plurality of reference signals each including a reference data indicative of a relation between the corresponding reference signal and a reference time. The second wireless terminal includes a timer configured to output an activation signal at a regular interval, a control unit, and a synchronization unit. The control unit activates a wireless receiver each time it receives the activation signal from the timer. When the wireless receiver receives the synchronization signal, the synchronization unit refers to the reference data obtained from the earliest reference signal and a reception time of the earliest reference signal, and determines the reference time. The synchronization unit controls the timer to output the activation signal after a lapse of a predetermined time from the reference time. The control unit controls a wireless transmitter to transmit a wireless signal during a period including a time period of receiving the activation signal from the timer.

US 2010/0079278 A1 relates to a power saving wireless fire alarm system that has a master station and a plurality of battery-powered fire detecting cc terminals linked for wireless communication with each other. Upon detection of a fire occurrence at one of the fire detecting terminals, the fire detecting terminal transmit a fire detection message to a master station which in turn transmit a wake-up message to the other fire detecting terminals and thereafter a fire information message which starts a multiple synchronous communication between the master station and the fire detecting terminals.; Each fire detecting terminal has a power controller which selects an intermittent reception mode of activating its own receiver only intermittently until receiving the wake-up message or information indicative of the fire occurrence, and select a constant operation mode thereafter to make the fire detecting terminals be ready for the multiple synchronous communication commenced by the fire information message from the master station.

WO 2011/104603 A1 discloses a wireless transmitter/receiver provided with: a local oscillator which oscillates at a predetermined local oscillator frequency; a mixer which mixes the local oscillator signal of the predetermined local oscillator frequency which is output from an output terminal of the local oscillator with a wireless signal received by antenna; a modulation circuit which modulates the local oscillator signal and generates a wireless signal; and a transmission/reception switching unit which alternatively switches between a ready-to-receive mode in which the output terminal of the local oscillator is connected to the mixer, and a ready-to-transmit mode in which the output terminal is connected to the antenna side, bypassing the mixer. The local oscillator is equipped with a reference oscillator unit which oscillates at a predetermined reference oscillator frequency which is lower than the local oscillator frequency; a first frequency conversion unit and a second frequency conversion unit which convert the reference oscillator frequency signal of the reference oscillator frequency which is output from an output terminal of the reference oscillator unit to local oscillator signals; a first conversion unit which alternatively switches between a first input mode in which the output terminal of the reference oscillator unit is connected to an input terminal of the first frequency conversion unit, and a second input mode in which the output terminal of the reference oscillator unit is connected an input terminal of the second frequency conversion unit; and a second conversion unit which alternatively switches, in conjunction with the switching operation of the first conversion unit, between a first output mode in which the output terminal of the local oscillator unit is connected to the output terminal of the first frequency conversion unit, and a second output mode in which the output terminal of the local oscillator unit is connected to the output terminal of the second frequency conversion unit. The second frequency conversion unit comprises a voltage control oscillator, a phase comparator, a divider, a loop filter, and a phase-locked loop which has a charge pump, and the first frequency conversion unit comprises a frequency multiplication circuit which has lower power consumption than the phase-locked loop.

EP 1 855 260 A1 shows another fire alarm system that comprises one receiver and a plurality of fire detectors. Each of the fire detectors and the receiver perform radio communication with each other by using a super frame SF comprising a plurality of frames F1 to F30 each of which includes one down-time slot B for transmission from a receiver side to a fire detector side and a plurality of up-time slots D1 to D99 for transmission from the fire detector side to the receiver side, and the fire detectors are assigned respectively to different ones of the up-time slots for transmission of the radio signal.

### Summary of Invention

In view of the above insufficiency, the present invention has aimed to reduce power consumption by means of shortening a period of time from time at which one wireless device detects an event to time at which another wireless device is informed of occurrence of the event.

The wireless communication system of the first aspect in accordance with the present invention, includes the features of independent claim 1.

In the wireless communication system of the second aspect in accordance with the present invention, realized in combination with the first aspect, the controller is configured to interrupt the counting of the intermittent reception period in response to reception of a predetermined synchronization signal through the receiver, and resume the counting of the intermittent reception period at a timing when predetermined waiting time passes from time of an end of the synchronization signal.

In the wireless communication system of the third aspect in accordance with the present invention, realized in combination with the second aspect, the wireless communication system further includes a synchronization device configured to transmit the synchronization signal.

In the wireless communication system of the fourth aspect in accordance with the present invention, realized in combination with any one of the first to third aspects, the controller is configured to not supply power from the power feeder to the receiver while the controller performs the counting of the intermittent reception period. The controller is configured to not supply power from the power feeder to the transmitter while the detector does not detect the occurrence of the event.

Further aspects in accordance with the present invention are provided in the dependent claims.

### Brief Description of the Drawings

**FIG. 1** is a time chart illustrating an operation of the wireless communication system of Embodiment 1.
**FIG. 2** is a block diagram illustrating the wireless device (fire alarm device) in the wireless communication system of Embodiment 1.
**FIG. 3** is a block diagram illustrating the fire sensing unit in the wireless communication system of Embodiment 1.
**FIG. 4** is a time chart illustrating another operation of the wireless communication system of Embodiment 1.
**FIG. 5** is a time chart illustrating an operation of the wireless communication system of Embodiment 2.
**FIG. 6** is a time chart illustrating another operation of the wireless communication system of Embodiment 2.

### Description of Embodiments

Hereinafter, embodiments in accordance with a technical concept of the present invention are described with reference to wireless communication systems (fire alarm systems) which includes wireless devices serving as fire alarms configured to produce a warning sound in response to detection of a fire and transmit a wireless signal which propagates through an electric wave as a medium and contains a fire detection message.

### (Embodiment 1)

The fire alarm system (wireless communication system) of the present embodiment includes multiple fire alarm devices **TR.** The multiple fire alarm devices **TR** are multiple wireless devices configured to perform wireless communication with each other by use of wireless signals propagating through an electric wave serving as a medium. Note that, in the following explanation, to distinguish the fire alarm devices **TR** from each other, the fire alarm devices are expressed as the fire alarm device **TR1, TR2,** ..., **TRn.** To describe the fire alarm devices **TR** collectively, the fire alarm devices are expressed as the fire alarm devices **TR.**

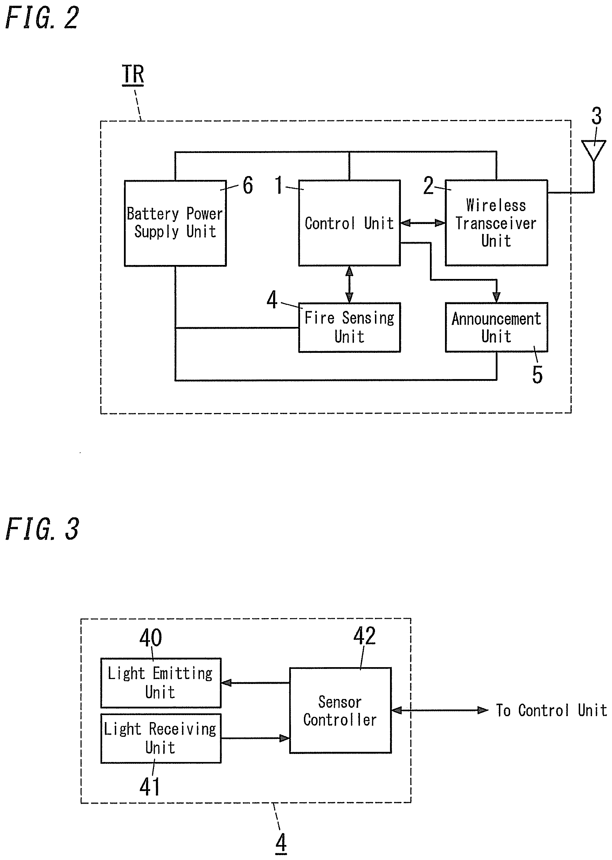

The fire alarm device **TR** includes a control unit (control circuit) **1,** a wireless transceiver unit (wireless transceiver circuit) **2,** an antenna **3,** a fire sensing unit (fire sensing circuit) **4,** an announcement unit (announcement circuit) **5,** and a battery power supply unit (battery power supply circuit) **6,** as shown in **FIG. 2****.** Additionally, the fire alarm device **TR** includes a housing (not shown) configured to accommodate the control unit **1,** the wireless transceiver unit **2,** the antenna **3,** the fire sensing unit **4,** the announcement unit **5,** and the battery power supply unit **6.**

The wireless transceiver unit **2** includes a transmitter (transmitting circuit) configured to transmit wireless signals and a receiver (receiving circuit) configured to receive wireless signals. Note that, the transmitter and the receiver are activated alternatively. In summary, the wireless transceiver unit **2** is activated as the transmitter or the receiver. The wireless transceiver unit **2** transmits and receives wireless signals propagating through an electric wave serving as a medium via the antenna **3** in conformity with "security radio equipment for low power radio station" stipulated in Article 6, paragraph 4, item 3 of regulations of enforcement of the Japanese Radio Act, for example.

The antenna **3** is configured to radiate an electric wave serving as a medium for wireless signals, and to receive such an electric wave. The antenna **3** may be mounted outside or inside the housing of the fire alarm device **TR.**

The announcement unit **5** is configured to announce (produces by a speaker) a fire alarm (hereinafter referred to as "warning sound") by a sound (e.g., a buzzing sound and a voice message).

The control unit **1** is constituted by hardware such as a microcomputer, a memory, and a timer (timer device) and software such as programs to be executed by a microcomputer, and is configured to control the wireless transceiver unit **2,** the fire sensing unit **4,** and the announcement unit **5.**

The battery power supply unit **6** is configured to supply operation power to each unit by use of a battery (e.g., a primary battery and a secondary battery) such as a dry cell as a power source. In particular, the battery power supply unit **6** serves as a power feeder configured to supply power to the transmitter and the receiver from the battery. In this sense, the fire alarm device **TR** is a battery powered wireless device.

Note that, unique identifiers are allocated exclusively to the fire alarm devices **TR.** Using the unique identifiers allows identification of which one of the fire alarm devices **TR** is a destination or a sender of a wireless signal.

The fire sensing unit **4** is configured to sense a fire by measuring a smoke density which is one of amounts to be observed when a fire has occurred. As shown in **FIG. 3****,** this fire sensing unit **4** includes a light emitting unit (light emitting circuit) **40,** a light receiving unit (light receiving circuit) **41,** and a sensor controller (sensor control circuit) **42.**

The light emitting unit **40** includes a light emitting diode and a drive circuit for lighting the light emitting diode, which are not shown, and is configured to emit light to a space which smoke caused by a fire is to enter. This space (smoke detection space) is provided inside the housing of the fire alarm device **TR.** The detection space is connected to an outside the housing so as to allow smoke caused by a fire to enter the detection space.

The light receiving unit **41** is configured to receive light which is emitted from the light emitting unit **40** and passes through the detection space, and provide a detection output (output signal level) depending on an intensity of the received light (amount of the received light) to the sensor controller **42.**

Thus, in the fire sensing unit **4,** the light emitting unit **40** and the light receiving unit **41** constitute a sensor for measuring a predetermined physical amount (in the present embodiment, a smoke density).

The sensor controller **42** is configured to control the light emitting unit **40** to emit light intermittently, and to judge whether a fire has occurred, based on the amount of the received light of the light receiving unit **41.**

For example, to judge whether a fire has occurred, the sensor controller **42** compares the output signal level (voltage level) of the light receiving unit **41** depending on the amount of the received light, that is the smoke density inside the space (detection space), with a predetermined threshold value. When the smoke density (output signal level) is equal to or more than the threshold value, the sensor controller **42** determines that a fire has occurred, and outputs a fire sensing signal to the control unit **1.** In contrast, when the smoke density (output signal level) is less than the threshold value, the sensor controller **42** determines that a fire has not occurred. Note that, to allow intermittent operation, a timer may be incorporated in the sensor controller **42.** However, the control unit **1** may perform timer counting instead of the sensor controller **42.**

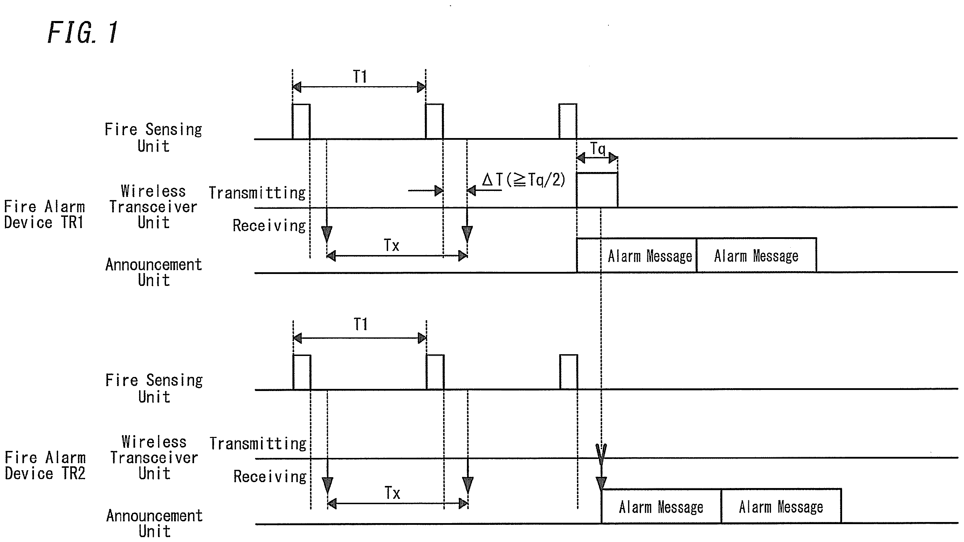

Further, to prolong lifetime of the battery by reducing power consumption, the sensor controller **42** activates the light emitting unit **40** and the light receiving unit **41** intermittently at a fixed cycle **T2** (e.g., several seconds to ten several seconds) (see **FIG. 1**).

In summary, the sensor controller **42** activates the sensor (the light emitting unit **40** and the light receiving unit **41**) intermittently and to obtain the detection output each time the sensor is activated. Each time obtaining the detection output from the sensor, the sensor controller **42** judges whether a fire has occurred, based on the obtained detection output (i.e., the sensor controller **42** performs detection of occurrence of a fire).

In the present embodiment, the sensor controller **42** determines that a fire has occurred when the detection output (smoke density) is equal to or more than the threshold value, and determines that a fire has not occurred when the detection output (smoke density) is less than the threshold value.

As described above, the fire sensing unit **4** serves as a detector configured to periodically perform detection of occurrence of a predetermined event (fire).

In the present embodiment, an example that the fire sensing unit **4** measures a smoke density as one of the amounts to be observed when a fire has occurred is shown, and however there is no intent to limit the configuration of the fire sensing unit **4** to the present example. For example, the fire sensing unit **4** may be configured to detect or measure another of the amounts to be observed when a fire has occurred, such as heat.

The control unit **1** is configured to, when the fire detection unit (detector) **4** has detected occurrence of the event (fire), supply power from the battery power supply unit (power feeder) **6** to operate the transmitter intermittently so that the transmitter transmits a wireless signal corresponding to the event (fire) during a transmission period **Tq** in which the transmitter is in operation. Note that, the control unit **1** is configured to not supply power from the battery power supply unit (power feeder) **6** to the transmitter while the fire detection unit (fire detector) **4** does not detect the occurrence of the event (fire).

Further, the control unit **1** is configured to, when the fire sensing unit (detector) **4** detects the occurrence of the event (fire), control the announcement unit (announcement device) **5** to announce the occurrence of the event (fire).

For example, when the fire sensing signal is outputted from the fire sensing unit **4,** the control unit **1** causes the announcement unit **5** to produce the warning sound to announce fire alarm, and sends the wireless signal (fire alarm signal) containing the fire alarm message (message corresponding to the event) through the wireless transceiver unit **2** in order to cause another fire alarm device **TR** to announce fire alarm. Even when receiving the fire alarm message by receiving, through the wireless transceiver unit **2,** the wireless signal sent from another fire alarm device **TR,** the control unit **1** controls the announcement unit **5** to produce the warning sound.

The control unit **1** is configured to repeat counting of a predetermined intermittent reception period **Tx.** The control unit **1** is configured to supply power from the battery power supply unit (power feeder) **6** to activate the receiver after completion of counting of the intermittent reception period **Tx,** and to deactivate the receiver when the receiver fails to receive a predetermined wireless signal (a wireless signal from another fire alarm device **TR**) before expiration of a predetermined reception period from time at which the receiver is activated. Note that, the control unit **1** is configured to not supply power from the battery power supply unit (power feeder) **6** to the receiver while the control unit **1** performs the counting of the intermittent reception period **Tx.**

For example, the control unit **1** repeatedly counts the predetermined intermittent reception period by use of the timer (timer device) incorporated in the microcomputer, and activates the wireless transceiver unit **2** each time the control unit **1** completes the counting of the intermittent reception period **Tx,** in order to check whether to receive a desired electric wave (wireless signal sent from another fire alarm device **TR**). When the control unit **1** fails to receive the electric wave, the control unit **1** deactivates the wireless transceiver unit **2** immediately to switch it to a waiting state. Thereby, average power consumption can be reduced drastically.

Note that, check of reception of electric waves is performed by the control unit **1** by judging the receiving signal strength indication (RSSI signal) which is a DC voltage signal proportional to the receiving signal strength outputted from the wireless transceiver unit **2.** Note that, such check is well known and therefore detailed explanation thereof is omitted.

Normally, timings at which the multiple fire alarm devices **TR** start to operate (timers start counting of the intermittent reception period **Tx**) do not coincide with each other. Therefore, timings at which the control units **1** activate the wireless transceiver units **2** to receive electric waves also may differ from each other.

In contrast, due to the present embodiment, in a similar manner to the conventional example disclosed in document **2,** when receiving a synchronization signal, the control unit **1** (reception control device) of each of the fire alarm devices **TR** interrupts counting of the intermittent reception period **Tx** by use of the timer, and resumes counting of the intermittent reception period **Tx** after a lapse of a fixed waiting time TW from the time of end of the synchronization signal. Therefore, after reception of the synchronization signal, timings at which the timers of the respective fire alarm devices **TR** complete counting of the intermittent reception period **Tx** are likely to coincide with each other.

In summary, the control unit **1** is configured to synchronize a counting completion timing at which counting of a next intermittent reception period **Tx** is completed, with another fire alarm device (wireless device) **TR.** Specifically, the control unit **1** is configured to interrupt the counting of the intermittent reception period **Tx** in response to reception of the predetermined synchronization signal through the receiver, and resume the counting of the intermittent reception period **Tx** at a timing when the fixed waiting time **Tw** passes from time of an end of the synchronization signal.

To achieve this function, the wireless communication system of the present embodiment includes a synchronization device configured to transmit the synchronization signal. Note that, the synchronization signal may be transmitted from a dedicated transmitter (not shown) or any of the fire alarm devices **TR.** In other words, the synchronization device may be a dedicated transmitter or any one of multiple fire alarm devices (wireless devices) **TR.** In the case when the dedicated transmitter transmits the synchronization signal, consumption of energy of the battery of the fire alarm device **TR** can be reduced compared with the case where the fire alarm device **TR** transmits the synchronization signal.

The control unit **1** (transmission controller) of the fire alarm device **TR** at fire origin activates the wireless transceiver unit (transmitter) **2** before completion of counting of the intermittent reception period **Tx** by the timer, and controls the wireless transceiver unit (transmitter) **2** to send the wireless signal containing the fire alarm message during the transmission period **Tq** including the time of completion of the counting. Meanwhile, in the fire alarm device **TR** which is not at the fire origin, when the control unit **1** activates the wireless transceiver unit (receiver) **2** in response to the completion of the counting of the intermittent reception period **Tx** by the timer, the control unit **1** can receive the wireless signal containing the fire alarm message immediately.

In this regard, as described with regard to the conventional technique, it is assumed that the fire sensing signal is outputted from the fire sensing unit **4** immediately after the wireless transceiver (the receiver) **2** finishes the intermittent reception. In this case, when the fire alarm message is transmitted at the next timing of the intermittent reception, providing of the warning sound may be delayed considerably.

In view of this, as shown in **FIG. 1****,** in the present embodiment, the fire sensing unit **4** ends the fire sensing at timing (detection completion timing) earlier by predetermined time (hereinafter referred to as preceding time) **ΔT** than the timing (counting completion timing) at which the counting of the intermittent reception period **Tx** by the timer. In summary, the fire sensing unit (detector) **4** is configured to end the detection of occurrence of the event (fire) at the timing (detection completion timing) earlier than the counting completion timing by the predetermined time (preceding time). Additionally, the control unit **1** is configured to control the transmitter to transmit a wireless signal corresponding to the event during the transmission period **Tq** including the counting completion timing.

Note that, the fire sensing is finished by the fire sensing unit **4** at timing at which the sensor controller **42** outputs the fire sensing signal or timing at which the sensor controller **42** determines that the output signal level is less than the threshold value as a result of comparison between the output signal level and the threshold value.

It is preferable that the preceding time **ΔT** be set to equal to or longer than a half of the transmission period **Tq** during which the wireless signal containing the fire alarm message is transmitted from the wireless transceiver unit (transmitter) **2** (**ΔT≥Tq/2**), for example.

Consequently, the fire sensing unit **4** ends the fire sensing at the timing earlier than the counting completion timing of every intermittent reception period **Tx** by the preceding time **ΔT.** Hence, when the fire sensing unit **4** senses a fire, the wireless transceiver unit **2** can immediately transmit the fire alarm message. As a result, compared with the conventional example, it is possible to shorten time from occurrence of a fire until announcement of the occurrence of the fire to the other fire alarm device **TR2,** and nevertheless reduce the power consumption.

When, as described above, the fire alarm device **TR1** at fire origin and the fire alarm device **TR2** not at the fire origin start to produce warning sounds at substantially the same time, it may be difficult to judge where the fire origin is.

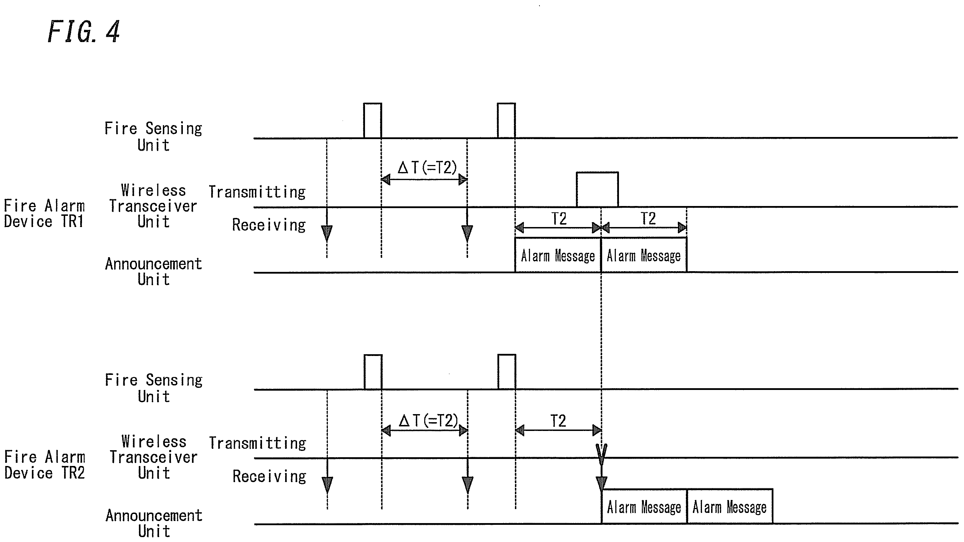

In view of this, as shown in **FIG. 4****,** it is preferable that the preceding time **ΔT** be set to time not shorter than time **T2** (e.g., time equal to **T2**) necessary for the control unit **1** to control the announcement unit **5** to announce (produce) the warning sound (warning message).

When the preceding time **ΔT** is set to time not shorter than the time **T2,** after the fire alarm device **TR1** at the fire origin produces the alarm message one time, the fire alarm device **TR2** not at the fire origin starts providing the alarm message. Therefore, it is possible to easily judge where the fire origin is.

The wireless communication system (fire alarm system) of the present embodiment described above is a wireless communication system which includes the multiple wireless devices (fire alarm devices) **TR** and allows these multiple wireless devices to transmit and receive wireless signal propagating through an electric wave serving as a medium. In the wireless communication system of the present embodiment, each wireless device (fire alarm device) **TR** includes: a transmitter (wireless transceiver) **2** for transmitting wireless signals; a receiver (wireless transceiver) **2** configured to receive wireless signals; a detector (fire sensing unit) **4** configured to detect occurrence of a predetermined event (fire); a transmission controller (control unit) **1**; a timer device (control unit) **1** configured to repeat counting of a fixed intermittent reception period **Tx;** a reception controller (control unit) **1**; and a power feeder (battery power supply unit) **6** for supplying operation power to each component by use of a battery as a power source. When the detector (fire sensing unit) **4** detects the occurrence of the event, the transmission controller (control unit) **1** activates the transmitter (wireless transceiver unit) **2** to repeat alternately an operation of controlling the transmitter to send a wireless signal containing a message corresponding to the event during a predetermined transmission period **Tq** and an operation of interrupting transmission of the wireless signal during a predetermined resting period, and further keeps the transmitter (wireless transceiver unit) **2** in an off-state while the detector (fire sensing unit) **4** does not detect the occurrence of the event. While the timer device (control unit) **1** counts the intermittent reception period **Tx,** the reception controller (control unit) **1** keeps the receiver (wireless transceiver unit) **2** in an off-state, and activates the receiver (wireless transceiver unit) **2** each time the timer device (control unit) **1** finishes counting of the intermittent reception period **Tx.** When the receiver (wireless transceiver) **2** receives the synchronization signal, the reception controller (control unit) **1** interrupts the counting of the intermittent reception period **Tx** by the timer device (control unit) **1** and resumes the counting of the intermittent reception period **Tx** by the timer device (control unit) **1** at the timing at which fixed waiting time **Tw** passes from the time of the end of the synchronization signal. The detector (fire sensing unit) **4** performs detection of the occurrence of the event periodically, and ends the detection of the occurrence of the event at the timing earlier by predetermined time (preceding time) **ΔT** than the timing of completion of the counting of the intermittent reception period **Tx** by the timer device (control unit) **1.** When the detector (fire sensing unit) **4** detects the occurrence of the event, the transmission controller (control unit) **1** controls the transmitter (wireless transceiver unit) **2** to transmit the wireless signal within the transmission period **Tq** including the timing of the completion of the counting of the intermittent reception period **Tx** by the timer device (control unit) **1.**

In other words, the wireless communication system of the present embodiment includes the following first to fourth features. Note that, the second to fourth features are optional.

In the first feature, the wireless communication system includes multiple wireless devices **TR** configured to perform wireless communication with each other by use of wireless signals propagating through an electric wave serving as a medium. Each of the multiple wireless devices **TR** includes: a transmitter **2** configured to transmit a wireless signal; a receiver **2** configured to receive a wireless signal; a battery power supply unit **6** configured to supply power to the transmitter **2** and the receiver **2** from a battery; a detector **4** configured to periodically perform detection of occurrence of a predetermined event; and a controller **1** configured to control the transmitter **2** and the receiver **2.** The controller **1** is configured to, when the detector **4** has detected occurrence of the event, supply power from the battery power supply unit **6** to operate the transmitter **2** intermittently so that the transmitter **2** transmits a wireless signal corresponding to the predetermined event during a transmission period **Tq** in which the transmitter **2** is in operation. The controller **1** is configured to repeat counting of a predetermined intermittent reception period **Tx.** The controller **1** is configured to supply power from the battery power supply unit 6 to activate the receiver **2** after completion of counting of the intermittent reception period **Tx,** and to deactivate the receiver **2** when the receiver **2** fails to receive a predetermined wireless signal before expiration of a predetermined reception period from time at which the receiver **2** is activated. The controller **1** is configured to synchronize a counting completion timing at which counting of a next intermittent reception period **Tx** is completed, with another wireless device **TR.** The detector **4** is configured to end the detection of occurrence of the event at a timing earlier than the counting completion timing by predetermined time. The controller **1** is configured to control the transmitter **2** to transmit a wireless signal corresponding to the event during the transmission period **Tq** including the counting completion timing.

In the second feature realized in combination with the first feature, the controller is configured to interrupt the counting of the intermittent reception period in response to reception of a predetermined synchronization signal through the receiver, and resume the counting of the intermittent reception period at a timing when predetermined waiting time passes from time of an end of the synchronization signal.

In the third feature realized in combination with the second feature, the wireless communication system includes a synchronization device configured to transmit the synchronization signal.

In the fourth feature realized in combination with any one of the first to third features, the controller **1** is configured to not supply power from the power feeder **6** to the receiver **2** while the controller **1** performs the counting of the intermittent reception period **Tx.** The controller **1** is configured to not supply power from the power feeder **6** to the transmitter **2** while the detector **4** does not detect the occurrence of the event.

Additionally, the wireless communication system of the present embodiment includes the fifth and sixth features. Note that, the fifth and sixth features are optional.

In the fifth feature realized in combination with any one of the first to fourth features, the wireless communication system includes an announcement device (announcement unit) **5** configured to make an audible announcement and a controller (control unit) **1** configured to, when the detector (fire sensing unit) **4** detects the occurrence of the event, control the announcement device (announcement unit) **5** to announce the occurrence of the event. The predetermined time (preceding time) **ΔT** is time not shorter than time necessary for the controller (control unit 1) to control the announcement device (announcement unit) **5** to announce the occurrence of the event.

In other words, each of the multiple wireless devices **TR** further includes an announcement device **5** configured to make an audible announcement. The controller **1** is configured to, when the detector **4** detects the occurrence of the event, control the announcement device **5** to announce the occurrence of the event. The predetermined time **ΔT** is time not shorter than time necessary for the controller **1** to control the announcement device **5** to announce the occurrence of the event.

In the sixth feature realized in combination with the fifth feature, the announcement device (announcement unit) **5** is configured to announce the occurrence of the event (fire) by producing a voice message.

As described above, according to the wireless communication system of the present embodiment, the detector (fire sensing unit) **4** ends detection of occurrence of the event (fire) at the timing (detection completion timing) earlier than the counting completion timing of every intermittent reception period **Tx** by the predetermined time (preceding time) **ΔT.** Hence, when the detector (fire sensing unit) **4** senses the event, the transmitter (wireless transceiver unit) **2** can immediately transmit the message corresponding to the event. As a result, compared with the conventional example, it is possible to shorten time from occurrence of the event until announcement of the occurrence of the event to the other wireless device **TR,** and nevertheless reduce the power consumption.

### (Embodiment 2)

The fire alarm device **TR** in the present embodiment has the same configurations as Embodiment 1, and therefore are designated by the same reference signs as Embodiment 1 to omit illustration and explanation about such configurations.

As for Embodiment 1, the sensor controller **42** outputs the fire sensing signal immediately when the output signal level of the light receiving unit **41** (the detection output from the sensor) is equal to or more than the threshold value. Hence, the possibility of misinformation caused by smoke (e.g., cigarette smoke) other than smoke caused by a fire or floating substances such as dust is likely to increase.

In view of this, according to the present embodiment, the fire sensing unit (detector) 4 includes the light emitting unit **40** configured to detect a smoke density (physical amount), and the light receiving unit (sensor), and operates the sensor intermittently. When the detection output of this sensor exceeds a predetermined threshold value a predetermined number of consecutive times, the fire sensing unit (detector) **4** determines that the event has occurred. In other words, the detector (fire sensing unit) **4** includes: the sensor (the light emitting unit **40** and the light receiving unit **41**) configured to measure a predetermined physical amount (smoke density); and the sensor controller **42** configured to activate the sensor intermittently and to obtain a detection output each time the sensor is activated. The sensor controller **42** is configured to, when the detection output exceeds a predetermined threshold value a predetermined number of times consecutively, determine that the event has occurred.

For example, when the output signal level of the light receiving unit **41** becomes equal to or more than the predetermined threshold value the predetermined number of times (e.g., four times) consecutively, the sensor controller **42** outputs the fire sensing signal. Thereby, the possibility of misinformation can be decreased. In this case, it is sufficient that the fire sensing unit **4** may end the last (fourth) fire sensing at the timing earlier by the preceding time **ΔT** than the counting completion timing of the intermittent reception period **Tx.**

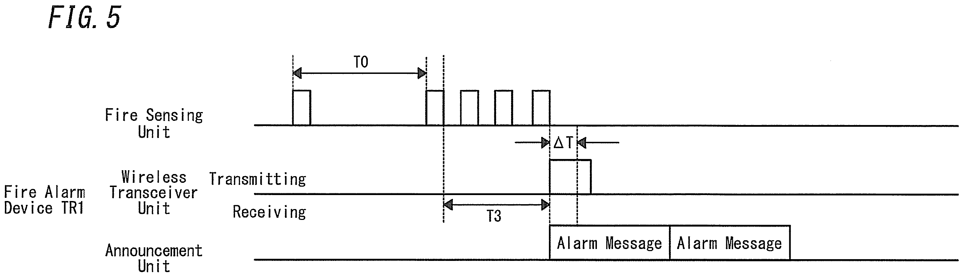

Optionally, as shown in **FIG. 5****,** the fire sensing unit **4** may dynamically change the cycle of the intermittent operation (cycle for operating the sensor).

In this case, the fire sensing unit (detector) **4** operates the sensor intermittently at a desired cycle until the detection output of the sensor exceeds the threshold value. When the detection output of the sensor exceeds the threshold value, the fire sensing unit (detector) 4 calculates remaining time to timing at which the detection of the occurrence of the event should be ended, and operates the sensor intermittently for only the number of times smaller than the predetermined number of times by one during the remaining time. In other words, the sensor controller **42** is configured to activate the sensor at an arbitrary cycle until the detection output exceeds the threshold value. The sensor controller **42** is configured to, when the detection output exceeds the threshold value, calculate remaining time **T3** from a timing at which the detection output exceeds the threshold value to a timing (detection completion timing) earlier than the counting completion timing by predetermined time (preceding time) **ΔT,** and activate the sensor intermittently a number of times less than the predetermined number of times by one during the remaining time **T3.**

For example, as shown in **FIG. 5****,** the sensor controller **42** lights the light emitting unit **40** at the arbitrary cycle **T0** until the output signal level of the light receiving unit **41** becomes equal to or more than the threshold value. When the output signal level of the light receiving unit **41** becomes equal to or more than the threshold value, the sensor controller **42** calculates the remaining time **T3** to the timing earlier by the preceding time **ΔT** than the timing at which counting of next intermittent reception period **Tx** is ended.

Further, the sensor controller **42** lights the light emitting unit **40** intermittently only the number of times (three times) smaller than the predetermined number of times (four times) by one during the remaining time **T3.** When the output signal level of the light receiving unit **41** becomes equal to or more than the threshold value for each of all the remaining checks (three checks), the sensor controller **42** outputs the fire sensing signal to the controller **1.**

However, when the output signal level of the light receiving unit **41** becomes less than the threshold value at any of checks, the sensor controller **42** ends the fire sensing operation immediately, and restarts to light the light emitting unit **40** intermittently at the cycle **T0**.

As described above, in the case where the fire sensing unit **4** changes dynamically the cycle of the intermittent operation, there is no need to consider the timing at which the counting of the intermittent reception period **Tx** is completed, while the output signal level of the light receiving unit **41** is less than the threshold value. As a result, it is possible to reduce processing loads of the controller **1** and the sensor controller **42.**

When the remaining time **T3** is equal to or shorter than a predetermined lower limit such as time shorter than time necessary for one time fire sensing, it is preferable that the sensor controller **42** uses time (**T3+Tx**) obtained by adding time equal to the intermittent reception period **Tx** to the remaining time **T3,** as new remaining time. Alternatively, the sensor controller **42** may use time (**T3+m*Tx,** m is an integer equal to or more than **2**) obtained by adding time equal to a multiple of the intermittent reception period **Tx** to the remaining time **T3,** as new remaining time. In other words, when the remaining time **T3** is equal to or less than the predetermined lower limit, the fire sensing unit (detector) **4** may replace the remaining time **T3** by time (**T3+Tx**) obtained by adding time equal to the intermittent reception period **Tx** to the remaining time **T3.** Alternatively, when the remaining time **T3** is equal to or less than the predetermined lower limit, the fire sensing unit (detector) **4** may replace the remaining time **T3** by time (**T3+m*Tx**) obtained by adding time (**m*Tx**) equal to a multiple of the intermittent reception period **Tx** to the remaining time **T3.** By doing so, the sensor controller **42** can certainly perform sensing operation multiple times.

Similarly to Embodiment 1, the fire sensing unit **4** may perform the fire sensing at the cycle **T2** and may shorten the intermittent cycle (cycle for operating the sensor) of the fire sensing when the output signal level of the light receiving unit **41** becomes equal to or more than the threshold value.

In this case, when the detection output exceeds the threshold value, the fire sensing unit (detector) 4 shortens the cycle for operating the sensor intermittently so as to operate the sensor intermittently a number of times smaller than the predetermined number of times by one during time (**Tx-ΔT**) obtained by subtracting the predetermined time (preceding time) **ΔT** from time equal to the intermittent reception period **Tx.** In other words, the sensor controller **42** is configured to activate the sensor at an arbitrary cycle until the detection output exceeds the threshold value. The sensor controller **42** is configured to, when the detection output exceeds the threshold value, activate the sensor intermittently a number of times less than the predetermined number of times by one during fixed time (**Tx-ΔT**) obtained by subtracting the predetermined time **ΔT** from time (**Tx**) equal to the intermittent reception period **Tx.**

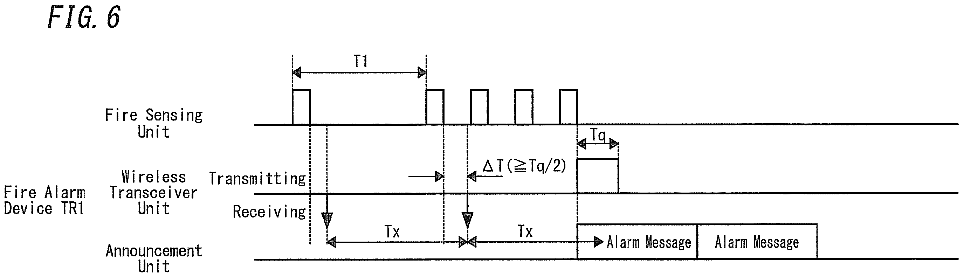

Accordingly, the remaining time from a timing at which the output signal level of the light receiving unit **41** becomes equal to or more than the threshold value to a timing earlier by the preceding time **ΔT** than a timing at which counting of the next intermittent reception period **Tx** ends becomes **Tx-ΔT** (see **FIG. 6**). Therefore, the sensor controller **42** lights the light emitting unit **40** intermittently a number of times (three times) less than the predetermined number of times (four times) by one during the remaining time (**Tx-ΔT**)**.** When the output signal level of the light receiving unit **41** becomes equal to or more than the threshold value for each of all the remaining checks (three checks), the sensor controller **42** outputs the fire sensing signal to the controller **1.**

However, when the output signal level of the light receiving unit **41** becomes less than the threshold value at any of checks, the sensor controller **42** restarts to light the light emitting unit **40** intermittently at the cycle **T2.**

When the fire sensing unit **4** operates in the aforementioned manner, the remaining time becomes fixed time (**Tx-ΔT**) and therefore there is no need to calculate the remaining time **T3.**

Note that, the sensor controller **42** may light the light emitting unit **40** intermittently a number of times (three times) less than the predetermined number of times (four times) by one during the remaining time (**m*Tx-ΔT**) obtained by subtracting the preceding time **ΔT** from a multiple of the intermittent reception period **Tx.**

In this case, when the detection output exceeds the threshold value, the fire sensing unit (detector) **4** shortens the cycle for operating the sensor intermittently so as to operate the sensor intermittently a number of times smaller than the predetermined number of times by one during time (**m*Tx-ΔT**) obtained by subtracting the predetermined time **ΔT** from time (**m*Tx**) equal to a multiple of the intermittent reception period **Tx.** In other words, the sensor controller **42** is configured to activate the sensor at an arbitrary cycle until the detection output exceeds the threshold value. The sensor controller **42** is configured to, when the detection output exceeds the threshold value, activate the sensor intermittently a number of times less than the predetermined number of times by one during fixed time (**m*Tx-ΔT**) obtained by subtracting the predetermined time **ΔT** from time (**m*Tx**) equal to a multiple of the intermittent reception period **Tx.**

In this case, the probability of misinformation can be more decreased.

Alternatively, the sensor controller **42** (detector) may operate the light emitting unit **40** (sensor) intermittently at an arbitrary cycle during the remaining time **T3** or time obtained by subtracting the preceding time **ΔT** from the intermittent reception period **Tx.** Consequently, the sensor controller **42** need not manage the timings of performing second or subsequent time fire sensing operation, and therefore processing load can be reduced.

Alternately, the sensor controller **42** (detector) may shorten a light emitting cycle (cycle of the fire sensing operation) of the light emitting unit **40** (sensor) with time, during time (**m*Tx-ΔT**) obtained by subtracting the preceding time **ΔT** from time equal to a multiple of the intermittent reception period **Tx.** The sensor controller **42** shortens the cycle (interval) of the fire sensing operation with an increase in the probability of occurrence of a fire, and therefore the probability of misinformation can be reduced.

The wireless communication system of the present embodiment described above includes the following seventh feature realized in combination with any one of the aforementioned first to sixth features. Note that, the second to sixth features are optional.

In the seventh feature, the detector **4** includes: the sensor (the light emitting unit **40** and the light receiving unit **41**) configured to measure a predetermined physical amount; and the sensor controller **42** configured to activate the sensor intermittently and to obtain a detection output from the sensor each time the sensor is activated. The sensor controller **42** is configured to, when the detection output exceeds a predetermined threshold value a predetermined number of times consecutively, determine that the event has occurred.

The wireless communication system of the present embodiment may include any of the eighth to eleventh features.

In the eighth feature realized in combination with the seventh feature, the sensor controller **42** is configured to activate the sensor at an arbitrary cycle (first cycle) until the detection output exceeds the threshold value. The sensor controller **42** is configured to, when the detection output exceeds the threshold value, calculate remaining time **T3** from a timing at which the detection output exceeds the threshold value to a timing (detection completion timing) earlier than the counting completion timing by predetermined time (preceding time) **ΔT,** and activate the sensor intermittently a number of times less than the predetermined number of times by one during the remaining time **T3.**

In the ninth feature realized in combination with the eighth feature, the sensor controller **42** is configured to activate the sensor at an arbitrary cycle (second cycle) during the remaining time **T3.**

In the tenth feature realized in combination with the ninth feature, the sensor controller **42** is configured to shorten the arbitrary cycle (second cycle) each time activating the sensor during the remaining time **T3.**

In the eleventh feature realized in combination with any one of the eighth to tenth features, the sensor controller **42** is configured to, when the remaining time is equal to or less than a predetermined lower limit, use time obtained by adding time equal to the intermittent reception period **Tx** or a multiple of the intermittent reception period **Tx** to the remaining time **T3,** as the remaining time (new remaining time).

The wireless communication system of the present embodiment may include the following twelfth to fourteenth features instead of the eighth to eleventh features.

In the twelfth feature realized in combination with the seventh feature, the sensor controller **42** is configured to activate the sensor at an arbitrary cycle (first cycle) until the detection output exceeds the threshold value. The sensor controller **42** is configured to, when the detection output exceeds the threshold value, activate the sensor intermittently a number of times less than the predetermined number of times by one during fixed time (**Tx-ΔT** or **m*Tx-AT**) obtained by subtracting the predetermined time (preceding time) **ΔT** from time equal to the intermittent reception period **Tx** or a multiple of the intermittent reception period **Tx.**

In the thirteenth feature realized in combination with the twelfth feature, the sensor controller **42** is configured to activate the sensor at the arbitrary cycle (third cycle) during the fixed time (**Tx-ΔT** or **m*Tx-ΔT**).

In the fourteenth feature realized in combination with the thirteenth feature, the sensor controller **42** is configured to shorten the arbitrary cycle (third cycle) each time activating the sensor during the fixed time (**Tx-ΔT** or **m*Tx-ΔT**).

In the present embodiment, the home fire alarm device exemplifies the wireless device. The wireless device constituting the wireless communication system in accordance with the present invention is not limited to a fire alarm device employing any sensing method such as a smoke sensing method, a heat sensing method, and a fire sensing method.

For example, the wireless device may include an air quality sensor for measuring an air quality such as a humidity of air, and a concentration of carbon dioxide, carbon monoxide, combustion gas (e.g., methane and propane) in air. Alternatively, the wireless device may include a human sensor for detecting a person in a monitored area.

Note that, the human sensor may be an infrared human sensor configured to measure an infrared ray emitted from a human body, an image analysis human sensor configured to detect a person by analyzing an image of a monitored area, or a hybrid human sensor employing an infrared manner and an imange analysis manner.

The wireless communication system is not limited to being constituted by one type of wireless devices. For example, the wireless communication system may be constituted by two or three types of wireless devices such as a wireless device serving as a fire alarm device, a wireless device including an air quality sensor, and a wireless device including a human sensor.

In other words, the wireless communication system of the present embodiment may include the following fifteenth feature.

In the fifteenth feature, the wireless communication system includes at least one type of wireless devices including: a wireless device (fire alarm device) including a detector for detecting a fire as an event; a wireless device including a detector (air quality sensor) for measuring air quality as an event; and a wireless device including a detector (human sensor) for detecting a person in a monitored area as an event.

In other words, in the wireless communication system, at least one of the multiple wireless devices **TR** is any one of: the wireless device **TR** including the detector configured to detect a fire as the event; the wireless device **TR** including the detector configured to measure an air quality as the event; and the wireless device **TR** including the detector configured to detect a person in a monitored area as the event.

## Claims

1. A wireless communication system, comprising:
multiple wireless devices (TR) configured to perform wireless communication with each other by use of wireless signals propagating through an electric wave serving as a medium;
each of the multiple wireless devices (TR) including:
a transmitter (2) configured to transmit a wireless signal;
a receiver (2) configured to receive a wireless signal;
a power feeder (6) configured to supply power to the transmitter (2) and the receiver (2) from a battery;
a detector (4) configured to periodically perform detection of occurrence of a predetermined event; and
a controller (1) configured to control the transmitter (2) and the receiver (2) ;
wherein the controller (1) is configured to, when the detector (4) has detected occurrence of the event, supply power from the power feeder (6) to operate the transmitter (2) intermittently so that the transmitter (2) transmits a wireless signal corresponding to the predetermined event during a transmission period (Tq) in which the transmitter (2) is in operation;
wherein the controller (1) is configured to repeat counting of a predetermined intermittent reception period (Tx) ;
wherein the controller (1) is configured to supply power from the power feeder (6) to activate the receiver (2) after completion of counting of the intermittent reception period (Tx), and to deactivate the receiver (2) when the receiver (2) fails to receive a predetermined wireless signal before expiration of a predetermined reception period from time at which the receiver (2) is activated;
wherein the controller (1) is configured to synchronize a counting completion timing at which counting of a next intermittent reception period (Tx) is completed, with another wireless device;
wherein each of the multiple wireless devices (TR) further includes an announcement device (5) configured to make an audible announcement;
wherein the controller (1) is configured to, when the detector (4) detects the occurrence of the event, control the announcement device (5) to announce the occurrence of the event; and
**characterized in that**
the detector (4) is configured to end the detection of occurrence of the event a predetermined time period (ΔT) earlier than the counting completion timing; and
the controller (1) is configured to control the transmitter to transmit a wireless signal corresponding to the event during the transmission period (Tq) when counting of a next intermittent reception period (Tx) is completed;
wherein the predetermined time period (ΔT) is not shorter than an announcement time period (T2) necessary for the controller (1) to control the announcement device (5) to announce the occurrence of the event.

2. The wireless communication system according to claim 1, wherein
the controller (1) is configured to interrupt the counting of the intermittent reception period (Tx) in response to reception of a predetermined synchronization signal through the receiver (2), and resume the counting of the intermittent reception period (Tx) at a timing when predetermined waiting time passes from time of an end of the synchronization signal.

3. The wireless communication system according to claim 2, further comprising a synchronization device configured to transmit the synchronization signal.

4. The wireless communication system according to claim 1, wherein:
the controller (1) is configured to not supply power from the power feeder (6) to the receiver (2) while the controller (1) performs the counting of the intermittent reception period (Tx); and
the controller (1) is configured to not supply power from the power feeder (6) to the transmitter (2) while the detector (4) does not detect the occurrence of the event.

5. The wireless communication system according to claim 1, wherein
the announcement device (5) is configured to announce the occurrence of the event by producing a voice message.

6. The wireless communication system according to claim 1, wherein:
the detector (4) includes
a sensor (41) configured to measure a predetermined physical amount, and
a sensor controller (42) configured to activate the sensor (41) intermittently and to obtain a detection output from the sensor (41) each time the sensor (41) is activated; and
the sensor controller (42) is configured to, when the detection output exceeds a predetermined threshold value a predetermined number of times consecutively, determine that the event has occurred.

7. The wireless communication system according to claim 6, wherein:
the sensor controller (42) is configured to activate the sensor (41) at an arbitrary cycle until the detection output exceeds the threshold value; and
the sensor controller (42) is configured to, when the detection output exceeds the threshold value, calculate remaining time (T3) from a timing at which the detection output exceeds the threshold value to a timing earlier than the counting completion timing by the predetermined time period (ΔT), and activate the sensor (41) intermittently a number of times less than the predetermined number of times by one during the remaining time (T3).

8. The wireless communication system according to claim 7, wherein
the sensor controller (42) is configured to activate the sensor (41) at an arbitrary cycle during the remaining time (T3).

9. The wireless communication system according to claim 8, wherein
the sensor controller (42) is configured to shorten the arbitrary cycle each time activating the sensor (41) during the remaining time.

10. The wireless communication system according to claim 7, wherein
the sensor controller (42) is configured to, when the remaining time is equal to or less than a predetermined lower limit, use time obtained by adding time equal to the intermittent reception period (Tx) or a multiple of the intermittent reception period (Tx) to the remaining time, as the remaining time.

11. The wireless communication system according to claim 6, wherein:
the sensor controller (42) is configured to activate the sensor (41) at an arbitrary cycle until the detection output exceeds the threshold value; and
the sensor controller (42) is configured to, when the detection output exceeds the threshold value, activate the sensor (41) intermittently a number of times less than the predetermined number of times by one during fixed time obtained by subtracting the predetermined time period (ΔT) from time equal to the intermittent reception period (Tx) or a multiple of the intermittent reception period (Tx).

12. The wireless communication system according to claim 11, wherein
the sensor controller (42) is configured to activate the sensor (41) at the arbitrary cycle during the fixed time.

13. The wireless communication system according to claim 12, wherein
the sensor controller (42) is configured to shorten the arbitrary cycle each time activating the sensor (41) during the fixed time.

14. A wireless device comprising:
a transmitter (2) configured to transmit a wireless signal;
a receiver (2) configured to receive a wireless signal;
a power feeder (6) configured to supply power to the transmitter (2) and the receiver (2) from a battery;
a detector (4) configured to periodically perform detection of occurrence of a predetermined event; and
a controller (1) configured to control the transmitter (2) and the receiver (2),
wherein the controller (1) is configured to, when the detector (4) has detected occurrence of the event, supply power from the power feeder (6) to operate the transmitter (2) intermittently so that the transmitter (2) transmits a wireless signal corresponding to the predetermined event during a transmission period in which the transmitter (2) is in operation,
wherein the controller (1) is configured to repeat counting of a predetermined intermittent reception period,
wherein the controller (1) is configured to supply power from the power feeder (6) to activate the receiver (2) after completion of counting of the intermittent reception period, and to deactivate the receiver (2) when the receiver (2) fails to receive a predetermined wireless signal before expiration of a predetermined reception period from time at which the receiver (2) is activated,
wherein the controller (1) is configured to synchronize a counting completion timing at which counting of a next intermittent reception period is completed, with another wireless device,
wherein the wireless device (TR) further includes an announcement device (5) configured to make an audible announcement;
wherein the controller (1) is configured to, when the detector (4) detects the occurrence of the event, control the announcement device (5) to announce the occurrence of the event; and
**characterized in that**
the detector (4) is configured to end the detection of occurrence of the event at a timing earlier than the counting completion timing by predetermined time, and
the controller (1) is configured to control the transmitter (2) to transmit a wireless signal corresponding to the event during the transmission period including the counting completion timing;
wherein the predetermined time period (ΔT) is not shorter than an announcement time period (T2) necessary for the controller (1) to control the announcement device (5) to announce the occurrence of the event.

## Patentansprüche

1. Drahtloses Kommunikationssystem, aufweisend:
mehrere drahtlose Geräte (TR), die dafür ausgelegt sind, unter Verwendung von drahtlosen Signalen, die sich über eine als ein Medium dienende elektrische Welle ausbreiten, miteinander drahtlos zu kommunizieren;
wobei jede der mehreren drahtlosen Geräte (TR) enthält:
einen Sender (2), der dafür ausgelegt ist, ein drahtloses Signal zu senden;
einen Empfänger (2), der dafür ausgelegt ist, ein drahtloses Signal zu empfangen;
eine Speiseleitung (6), die dafür ausgelegt ist, dem Sender (2) und dem Empfänger (2) Strom von einer Batterie zuzuführen;
einen Detektor (4), der dafür ausgelegt ist, periodisch eine Erfassung eines Eintretens eines vorbestimmten Ereignisses durchzuführen; und
eine Steuereinrichtung (1), die dafür ausgelegt ist, den Sender (2) und den Empfänger (2) zu steuern;
wobei die Steuereinrichtung (1) dafür ausgelegt ist, wenn der Detektor (4) ein Eintreten des Ereignisses erfasst hat, Strom von der Speiseleitung (6) zuzuführen, um den Sender (2) intermittierend zu betreiben, so dass der Sender (2) während einer Sendeperiode (Tq), in der der Sender (2) in Betrieb ist, ein drahtloses Signal sendet, das dem vorbestimmten Ereignis entspricht;
wobei die Steuereinrichtung (1) dafür ausgelegt ist, die Zählung einer vorbestimmten intermittierenden Empfangsperiode (Tx) zu wiederholen;
wobei die Steuereinrichtung (1) dafür ausgelegt ist, Strom von der Speiseleitung (6) zuzuführen, um den Empfänger (2) nach Vollendung der Zählung der intermittierenden Empfangsperiode (Tx) zu aktivieren, und den Empfänger (2) zu deaktivieren, wenn der Empfänger (2) vor dem Verstreichen einer vorbestimmten Empfangsperiode von dem Zeitpunkt an, in dem der Empfänger (2) aktiviert ist, kein vorbestimmtes drahtloses Signal empfängt;
wobei die Steuereinrichtung (1) dafür ausgelegt ist, einen Zählungsvollendungszeitpunkt, in dem die Zählung einer nächsten intermittierenden Empfangsperiode (Tx) beendet ist, mit einer weiteren drahtlosen Vorrichtung zu synchronisieren;
wobei jedes der mehreren drahtlosen Geräte (TR) ferner eine Ansagevorrichtung (5) enthält, die dafür ausgelegt ist, eine akustische Ansage durchzuführen;
wobei die Steuereinrichtung (1) dafür ausgelegt ist, wenn der Detektor (4) das Eintreten des Ereignisses erfasst, die Ansagevorrichtung (5) zu veranlassen, das Eintreten des Ereignisses anzusagen; und
**dadurch gekennzeichnet, dass**
der Detektor (4) dafür ausgelegt ist, das Erfassen des Eintretens des Ereignisses um eine vorbestimmte Zeitperiode (ΔT) vor dem Zählungsvollendungszeitpunkt zu beenden; und die Steuereinrichtung (1) dafür ausgelegt ist, den Sender zu veranlassen, während der Sendeperiode (Tq) ein drahtloses Signal, das dem Ereignis entspricht, zu senden, wenn die Zählung einer nächsten intermittierenden Empfangsperiode (Tx) beendet ist;
wobei die vorbestimmte Zeitperiode (ΔT) nicht kürzer ist als eine Ansagezeitperiode (T2), die für die Steuereinrichtung (1) erforderlich ist, um die Ansagevorrichtung (5) zu veranlassen, das Eintreten des Ereignisses anzusagen.

2. Drahtloses Datenkommunikationssystem nach Anspruch 1, wobei die Steuereinrichtung (1) dafür ausgelegt ist, in Reaktion auf einen Empfang eines vorbestimmten Synchronisationssignals durch den Empfänger (2) die Zählung der intermittierenden Empfangsperiode (Tx) zu unterbrechen und die Zählung der intermittierenden Empfangsperiode (Tx) in einem Zeitpunkt wiederaufzunehmen, wenn eine vorbestimmte Wartezeit von dem Zeitpunkt eines Endes des Synchronisationssignals verstreicht.

3. Drahtloses Datenkommunikationssystem nach Anspruch 2, ferner mit einer Synchronisationsvorrichtung, die dafür ausgelegt ist, das Synchronisationssignal zu senden.

4. Drahtloses Datenkommunikationssystem nach Anspruch 1, wobei:
die Steuereinrichtung (1) dafür ausgelegt ist, dem Empfänger (2) keinen Strom von der Speiseleitung (6) zuzuführen, während die Steuereinrichtung (1) die Zählung der intermittierenden Empfangsperiode (Tx) durchführt; und
die Steuereinrichtung (1) dafür ausgelegt ist, dem Sender (2) keinen Strom von der Speiseleitung (6) zuzuführen, während der Detektor (4) das Eintreten des Ereignisses nicht erfasst.

5. Drahtloses Datenkommunikationssystem nach Anspruch 1, wobei die Ansagevorrichtung (5) dafür ausgelegt ist das Eintreten des Ereignisses durch ein Erzeugen einer Sprachnachricht anzusagen.

6. Drahtloses Datenkommunikationssystem nach Anspruch 1, wobei der Detektor (4) enthält:
einen Sensor (41), der dafür ausgelegt ist, eine vorbestimmte physikalische Größe zu erfassen, und eine Sensorsteuervorrichtung (42), die dafür ausgelegt ist, den Sensor (41) intermittierend zu aktivieren und bei jeder Aktivierung des Sensors (41) eine Erfassungsausgabe von dem Sensor (41) zu erhalten; und
die Sensorsteuervorrichtung (42) dafür ausgelegt ist, wenn die Erfassungsausgabe einen vorgegebenen Schwellenwert eine vorbestimmte Anzahl von Malen aufeinanderfolgend überschreitet, zu bestimmen, dass das Ereignis aufgetreten ist

7. Drahtloses Datenkommunikationssystem nach Anspruch 6, wobei:
die Sensorsteuervorrichtung (42) dafür ausgelegt ist, den Sensor (41) in einem beliebigen Zyklus zu aktivieren, bis die Erfassungsausgabe den Schwellenwert überschreitet; und
die Sensorsteuervorrichtung (42) dafür ausgelegt ist, wenn die Erfassungsausgabe den Schwellenwert überschreitet, eine Restzeit (T3) von einem Zeitpunkt, in dem die Erfassungsausgabe den Schwellenwert überschreitet, bis zu einem Zeitpunkt, der um die vorbestimmte Zeitspanne (ΔT) vor dem Zählungsvollendungszeitpunkt liegt, zu berechnen und den Sensor (41) eine Anzahl von Malen intermittierend zu aktivieren, die um Eins kleiner ist als die vorbestimmte Anzahl von Malen während der Restzeit (T3).

8. Drahtloses Datenkommunikationssystem nach Anspruch 7, wobei die Sensorsteuervorrichtung (42) dafür ausgelegt ist, den Sensor (41) während der Restzeit (T3) in einem beliebigen Zyklus zu aktivieren.

9. Drahtloses Datenkommunikationssystem nach Anspruch 8, wobei die Sensorsteuervorrichtung (42) dafür ausgelegt ist, den beliebigen Zyklus bei jedem Aktivieren des Sensors (41) während der Restzeit zu verkürzen.

10. Drahtloses Datenkommunikationssystem nach Anspruch 7, wobei die Sensorsteuervorrichtung (42) dafür ausgelegt ist, wenn die Restzeit kleiner gleich einer vorbestimmten unteren Grenze ist, eine Zeit, die durch ein Addieren einer Zeit erhalten wird, die gleich der intermittierenden Empfangsperiode (Tx) oder gleich einem Vielfachen der intermittierenden Empfangsperiode (Tx) ist, zu der Restzeit, als die Restzeit zu verwenden.

11. Drahtloses Datenkommunikationssystem nach Anspruch 6, wobei:
die Sensorsteuervorrichtung (42) dafür ausgelegt ist, den Sensor (41) in einem beliebigen Zyklus zu aktivieren, bis die Erfassungsausgabe den Schwellenwert überschreitet; und
die Sensorsteuervorrichtung (42) dafür ausgelegt ist, wenn die Erfassungsausgabe den Schwellenwert überschreitet, den Sensor (41) eine Anzahl von Malen intermittierend zu aktivieren, die um Eins kleiner ist als die vorbestimmte Anzahl von Malen während einer feststehenden Zeit, die erhalten wird durch eine Subtraktion der vorbestimmten Zeitperiode (ΔT) von der Zeit, die gleich der intermittierenden Empfangsperiode (Tx) oder gleich einem Vielfachen der intermittierenden Empfangsperiode (Tx) ist.

12. Drahtloses Datenkommunikationssystem nach Anspruch 11, wobei die Sensorsteuervorrichtung (42) dafür ausgelegt ist, den Sensor (41) während der feststehenden Zeit in dem beliebigen Zyklus zu aktivieren.

13. Drahtloses Datenkommunikationssystem nach Anspruch 12, wobei die Sensorsteuervorrichtung (42) dafür ausgelegt ist, den beliebigen Zyklus während der feststehenden Zeit bei jedem Aktivieren des Sensors (41) zu verkürzen.

14. Drahtlose Vorrichtung, aufweisend:
einen Sender (2), der dafür ausgelegt ist, ein drahtloses Signal zu senden;
einen Empfänger (2), der dafür ausgelegt ist, ein drahtloses Signal zu empfangen;
eine Speiseleitung (6), die dafür ausgelegt ist, dem Sender (2) und dem Empfänger (2) Strom von einer Batterie zuzuführen;
einen Detektor (4), der dafür ausgelegt ist, periodisch eine Erfassung eines Eintretens eines vorbestimmten Ereignisses durchzuführen; und
eine Steuereinrichtung (1), die dafür ausgelegt ist, den Sender (2) und den Empfänger (2) zu steuern,
wobei die Steuereinrichtung (1) dafür ausgelegt ist, wenn der Detektor (4) ein Eintreten des Ereignisses erfasst hat, Strom von der Speiseleitung (6) zuzuführen, um den Sender (2) intermittierend zu betreiben, so dass der Sender (2) während einer Sendeperiode, in der der Sender (2) in Betrieb ist, ein drahtloses Signal sendet, das dem vorbestimmten Ereignis entspricht,
wobei die Steuereinrichtung (1) dafür ausgelegt ist, die Zählung einer vorbestimmten intermittierenden Empfangsperiode (Tx) zu wiederholen,
wobei die Steuereinrichtung (1) dafür ausgelegt ist, Strom von der Speiseleitung (6) zuzuführen, um den Empfänger (2) nach Vollendung der Zählung der intermittierenden Empfangsperiode (Tx) zu aktivieren, und den Empfänger (2) zu deaktivieren, wenn der Empfänger (2) vor dem Verstreichen einer vorbestimmten Empfangsperiode von dem Zeitpunkt an, in dem der Empfänger (2) aktiviert ist, kein vorbestimmtes drahtloses Signal empfängt,
wobei die Steuereinrichtung (1) dafür ausgelegt ist, einen Zählungsvollendungszeitpunkt, in dem die Zählung einer nächsten intermittierenden Empfangsperiode beendet ist, mit einer weiteren drahtlosen Vorrichtung zu synchronisieren,
wobei die drahtlose Vorrichtung (TR) ferner eine Ansagevorrichtung (5) enthält, die dafür ausgelegt ist, eine akustische Ansage durchzuführen;
wobei die Steuereinrichtung (1) dafür ausgelegt ist, wenn der Detektor (4) das Eintreten des Ereignisses erfasst, die Ansagevorrichtung (5) zu veranlassen, das Eintreten des Ereignisses anzusagen; und
**dadurch gekennzeichnet, dass**
der Detektor (4) dafür ausgelegt ist, das Erfassen des Eintretens des Ereignisses um eine vorbestimmte Zeitperiode (ΔT) vor dem Zählungsvollendungszeitpunkt zu beenden, und die Steuereinrichtung (1) dafür ausgelegt ist, den Sender (2) zu veranlassen, während der Sendeperiode, die den Zählungsvollendungszeitpunkt einschließt, ein drahtloses Signal zu senden, das dem Ereignis entspricht;
wobei die vorbestimmte Zeitperiode (ΔT) nicht kürzer ist als eine Ansagezeitperiode (T2), die für die Steuereinrichtung (1) erforderlich ist, um die Ansagevorrichtung (5) zu veranlassen, das Eintreten des Ereignisses anzusagen.

## Revendications

1. Système de communication sans fil, comprenant :
de multiples dispositifs sans fil (TR) configurés de manière à mettre en oeuvre une communication sans fil entre eux, en utilisant des signaux sans fil se propageant à travers une onde électrique faisant office de support ;
chacun des multiples dispositifs sans fil (TR) incluant :
un émetteur (2) configuré de manière à transmettre un signal sans fil ;
un récepteur (2) configuré de manière à recevoir un signal sans fil ;
un dispositif d'alimentation en énergie (6) configuré de manière à alimenter l'émetteur (2) et le récepteur (2) à partir d'une batterie ;
un détecteur (4) configuré de manière à mettre périodiquement en oeuvre une détection d'occurrence d'un événement prédéterminé ; et
un contrôleur (1) configuré de manière à commander l'émetteur (2) et le récepteur (2)
dans lequel le contrôleur (1) est configuré de manière à, lorsque le détecteur (4) a détecté l'occurrence de l'événement, fournir de l'énergie, à partir du dispositif d'alimentation en énergie (6), en vue de faire fonctionner l'émetteur (2) de façon intermittente, afin que l'émetteur (2) transmette un signal sans fil correspondant à l'événement prédéterminé pendant une période de transmission (Tq) au cours de laquelle l'émetteur (2) est en fonctionnement ;
dans lequel le contrôleur (1) est configuré de manière à répéter un comptage d'une période de réception intermittente prédéterminée (Tx) ;
dans lequel le contrôleur (1) est configuré de manière à fournir de l'énergie, à partir du dispositif d'alimentation en énergie (6), en vue d'activer le récepteur (2) à l'issue du comptage de la période de réception intermittente (Tx), et de désactiver le récepteur (2) lorsque le récepteur (2) ne reçoit pas un signal sans fil prédéterminé avant l'expiration d'une période de réception prédéterminée à compter de l'instant où le récepteur (2) est activé ;
dans lequel le contrôleur (1) est configuré de manière à synchroniser une temporisation d'achèvement de comptage à laquelle le comptage d'une période de réception intermittente successive (Tx) est achevé, avec un autre dispositif sans fil ;
dans lequel chacun des multiples dispositifs sans fil (TR) inclut en outre un dispositif d'annonce (5) configuré de manière à émettre une annonce audible ;
dans lequel le contrôleur (1) est configuré de manière à, lorsque le détecteur (4) détecte l'occurrence de l'événement, commander au dispositif d'annonce (5) d'annoncer l'occurrence de l'événement ; et
**caractérisé en ce que**
le détecteur (4) est configuré de manière à mettre fin à la détection de l'occurrence de l'événement, une période de temps prédéterminée (ΔT) avant la temporisation d'achèvement de comptage ; et
le contrôleur (1) est configuré de manière à commander à l'émetteur de transmettre un signal sans fil correspondant à l'événement au cours de la période de transmission (Tq) où le comptage d'une période de réception intermittente successive (Tx) est achevé ;
dans lequel la période de temps prédéterminée (ΔT) n'est pas plus courte qu'une période de temps d'annonce (T2) nécessaire au contrôleur (1) pour commander au dispositif d'annonce (5) d'annoncer l'occurrence de l'événement.

2. Système de communication sans fil selon la revendication 1, dans lequel :
le contrôleur (1) est configuré de manière à interrompre le comptage de la période de réception intermittente (Tx) en réponse à la réception d'un signal de synchronisation prédéterminé par le récepteur (2), et à reprendre le comptage de la période de réception intermittente (Tx) à une temporisation où un temps d'attente prédéterminé s'écoule à partir de l'instant d'une fin du signal de synchronisation.

3. Système de communication sans fil selon la revendication 2, comprenant en outre un dispositif de synchronisation configuré de manière à transmettre le signal de synchronisation.

4. Système de communication sans fil selon la revendication 1, dans lequel :
le contrôleur (1) est configuré de manière à ne pas fournir de l'énergie, du dispositif d'alimentation en énergie (6) au récepteur (2), tandis que le contrôleur (1) met en oeuvre le comptage de la période de réception intermittente (Tx) ; et
le contrôleur (1) est configuré de manière à ne pas fournir de l'énergie, du dispositif d'alimentation en énergie (6) au récepteur (2), tandis que le détecteur (4) ne détecte pas l'occurrence de l'événement.

5. Système de communication sans fil selon la revendication 1, dans lequel :
le dispositif d'annonce (5) est configuré de manière à annoncer l'occurrence de l'événement en produisant un message vocal.

6. Système de communication sans fil selon la revendication 1, dans lequel :
le détecteur (4) inclut :
un capteur (41) configuré de manière à mesurer une quantité physique prédéterminée ; et
un contrôleur de capteur (42) configuré de manière à activer le capteur (41) par intermittence, et à obtenir une sortie de détection en provenance du capteur (41) à chaque fois que le capteur (41) est activé ; et
le contrôleur de capteur (42) est configuré de manière à, lorsque la sortie de détection dépasse une valeur de seuil prédéterminée un nombre prédéterminé de fois, consécutivement, déterminer que l'événement s'est produit.

7. Système de communication sans fil selon la revendication 6, dans lequel :
le contrôleur de capteur (42) est configuré de manière à activer le capteur (41) au cours d'un cycle arbitraire jusqu'à ce que la sortie de détection dépasse la valeur de seuil ; et
le contrôleur de capteur (42) est configuré de manière à, lorsque la sortie de détection dépasse la valeur de seuil, calculer un temps restant (T3), depuis une temporisation à laquelle la sortie de détection dépasse la valeur de seuil jusqu'à une temporisation antérieure, de la période de temps prédéterminée (ΔT), à la temporisation d'achèvement de comptage, et activer le capteur (41), par intermittence, un nombre de fois inférieur d'une unité au nombre prédéterminé de fois au cours du temps restant (T3).

8. Système de communication sans fil selon la revendication 7, dans lequel :
le contrôleur de capteur (42) est configuré de manière à activer le capteur (41) au cours d'un cycle arbitraire pendant le temps restant (T3).

9. Système de communication sans fil selon la revendication 8, dans lequel :
le contrôleur de capteur (42) est configuré de manière à raccourcir le cycle arbitraire à chaque occurrence d'activation du capteur (41) au cours du temps restant.

10. Système de communication sans fil selon la revendication 7, dans lequel :
le contrôleur de capteur (42) est configuré de manière à, lorsque le temps restant est égal ou inférieur à une limite inférieure prédéterminée, utiliser un temps obtenu en ajoutant un temps égal à la période de réception intermittente (Tx), ou à un multiple de la période de réception intermittente (Tx), au temps restant, en tant que le temps restant.

11. Système de communication sans fil selon la revendication 6, dans lequel :
le contrôleur de capteur (42) est configuré de manière à activer le capteur (41) au cours d'un cycle arbitraire jusqu'à ce que la sortie de détection dépasse la valeur de seuil ; et le contrôleur de capteur (42) est configuré de manière à, lorsque la sortie de détection dépasse la valeur de seuil, activer le capteur (41), par intermittence, un nombre de fois inférieur, d'une unité, au nombre prédéterminé de fois, au cours d'un temps fixe obtenu en soustrayant la période de temps prédéterminée (ΔT) du temps égal à la période de réception intermittente (Tx) ou à un multiple de la période de réception intermittente (Tx).

12. Système de communication sans fil selon la revendication 11, dans lequel :
le contrôleur de capteur (42) est configuré de manière à activer le capteur (41) au cours du cycle arbitraire pendant le temps fixe.

13. Système de communication sans fil selon la revendication 12, dans lequel :
le contrôleur de capteur (42) est configuré de manière à raccourcir le cycle arbitraire à chaque occurrence d'activation du capteur (41) au cours du temps fixe.

14. Dispositif sans fil comprenant :
un émetteur (2) configuré de manière à transmettre un signal sans fil ;
un récepteur (2) configuré de manière à recevoir un signal sans fil ;
un dispositif d'alimentation en énergie (6) configuré de manière à alimenter l'émetteur (2) et le récepteur (2) à partir d'une batterie ;
un détecteur (4) configuré de manière à mettre périodiquement en oeuvre une détection d'occurrence d'un événement prédéterminé ; et
un contrôleur (1) configuré de manière à commander l'émetteur (2) et le récepteur (2) ;
dans lequel le contrôleur (1) est configuré de manière à, lorsque le détecteur (4) a détecté l'occurrence de l'événement, fournir de l'énergie, à partir du dispositif d'alimentation en énergie (6), en vue de faire fonctionner l'émetteur (2) de façon intermittente, afin que l'émetteur (2) transmette un signal sans fil correspondant à l'événement prédéterminé pendant une période de transmission au cours de laquelle l'émetteur (2) est en fonctionnement ;
dans lequel le contrôleur (1) est configuré de manière à répéter un comptage d'une période de réception intermittente prédéterminée ;
dans lequel le contrôleur (1) est configuré de manière à fournir de l'énergie, à partir du dispositif d'alimentation en énergie (6), en vue d'activer le récepteur (2) à l'issue du comptage de la période de réception intermittente, et de désactiver le récepteur (2) lorsque le récepteur (2) ne reçoit pas un signal sans fil prédéterminé avant l'expiration d'une période de réception prédéterminée à compter de l'instant où le récepteur (2) est activé ;
dans lequel le contrôleur (1) est configuré de manière à synchroniser une temporisation d'achèvement de comptage à laquelle le comptage d'une période de réception intermittente successive est achevé, avec un autre dispositif sans fil ;
dans lequel le dispositif sans fil (TR) inclut en outre un dispositif d'annonce (5) configuré de manière à émettre une annonce audible ;
dans lequel le contrôleur (1) est configuré de manière à, lorsque le détecteur (4) détecte l'occurrence de l'événement, commander au dispositif d'annonce (5) d'annoncer l'occurrence de l'événement ; et
**caractérisé en ce que**
le détecteur (4) est configuré de manière à mettre fin à la détection de l'occurrence de l'événement, à une temporisation antérieure, du temps prédéterminé, à la temporisation d'achèvement de comptage ; et
le contrôleur (1) est configuré de manière à commander à l'émetteur (2) de transmettre un signal sans fil correspondant à l'événement au cours de la période de transmission incluant la temporisation d'achèvement de comptage ;
dans lequel la période de temps prédéterminée (ΔT) n'est pas plus courte qu'une période de temps d'annonce (T2) nécessaire au contrôleur (1) pour commander au dispositif d'annonce (5) d'annoncer l'occurrence de l'événement.
